# EUROPÄISCHE PATENTSCHRIFT

(11) **EP 3 951 116 B1**
(45) Veröffentlichungstag und Bekanntmachung des Hinweises auf die Patenterteilung: **31.01.2024**
(21) Anmeldenummer: 20189416.9
(22) Anmeldetag: 04.08.2020
(51) Int. Cl.: E04G 17/065, F16B 2/24, F16B 39/10, F16B 39/04, F16B 39/32

(54) **SCHALUNGSANKER**
FORMWORK ANCHOR
TIRANT DE COFFRAGE

(43) Veröffentlichungstag der Anmeldung: 09.02.2022
(73) Patentinhaber: MEVA Schalungs-Systeme GmbH, 72221 Haiterbach (DE)
(72) Erfinder: Schramm, Uwe, 72160 Horb - Mühringen (DE); Schille, Rick, 72221 Haiterbach (DE)
(74) Vertreter: Witte, Weller & Partner Patentanwälte mbB

(56) Entgegenhaltungen:
- CH-A- 485 097
- DE-A1-102010 002 108
- DE-A1-102018 107 081
- IT-A1-201800 006 063
- US-A- 2 270 448

## Beschreibung

Die Erfindung betrifft einen Schalungsanker zum Verbinden von zwei mit Abstand einander gegenüber angeordneten Schalungselementen mit den Merkmalen des Oberbegriffs des Anspruchs 1.

Betonschalungselemente oder kurz Schalungselemente werden zum Betonieren von Wänden verwendet. Dazu werden Schalungselemente mit einem normalerweise konstanten Abstand, der einer Dicke der zu betonierenden Wand entspricht, einander gegenüber angeordnet. Die Schalungselemente weisen typischerweise eine Platte aus (Sperr-) Holz oder Kunststoff als Schalhaut und einen ebenen Rahmen aus längs und quer beziehungsweise horizontal und vertikal verlaufenden Stahl- oder Aluminiumprofilen zur Versteifung auf einer Rückseite der Schalhaut auf. Zum Betonieren werden die Schalungselemente mit ihren Schalhäuten einander zugewandt in dem Abstand voneinander angeordnet. Um die Schalungselemente gegen einen Druck eines fließfähig zwischen sie eingefüllten Betons zu halten, werden sie mit Schalungsankern verbunden, die Ankerstäbe mit Außengewinden an beiden Enden aufweisen, die durch Durchstecklöcher in den einander gegenüber angeordneten Schalungselementen gesteckt werden und auf deren Außengewinde Ankermuttern auf den einander abgewandten Rückseiten der Schalungselemente geschraubt werden, die die Schalungselemente in ihrem Abstand voneinander halten. Als Beispiel wird auf einen Schalungsanker verwiesen, der aus der Offenlegungsschrift DE 10 2010 002 108 A1 bekannt ist. Um die Ankermutter drehfest auf dem Ankerstab zu fixieren, weist die Ankermutter eines aus der Schweizer Patentschrift CH 485 097 bekannten Schalungsankers einen Querschlitz auf, in dem ein Schieber mit einem schlüssellochförmigen Loch aufgenommen ist. Der Ankerstab des bekannten Schalungsankers weist im Bereich eines seiner beiden Außengewinde Abflachungen auf, die in Längsrichtung des Ankerstabs verlaufende Parallelflächen an gegenüberliegenden Umfangsstellen des Ankerstabs bilden. Wird der Schieber in der Ankermutter so verschoben, dass sich ein schmales Ende des schlüssellochförmigen Lochs auf dem Ankerstab befindet, hält das schmale Ende des schlüssellochförmigen Lochs des Schiebers durch Formschluss mit den Parallelflächen des Ankerstabs die Ankermutter drehfest auf dem Ankerstab, womit die Ankermutter auch axial auf dem Ankerstab fixiert ist und Schalungselemente in ihrem Abstand voneinander hält. Befindet sich der Ankerstab in einem runden Teil des schlüssellochförmigen Lochs, lässt sich die Ankermutter auf dem Ankerstab drehen und dadurch axial auf dem Ankerstab einstellen. Anstelle des Schiebers mit dem schlüssellochförmigen Loch kann die Ankermutter des bekannten Schalungsankers auch einen exzentrisch in einem Querschlitz der Ankermutter angeordneten Schieber aufweisen, der durch Verschieben in Anlage an eine der beiden Parallelflächen des Ankerstabs gebracht werden kann, so dass er die Ankermutter durch Formschluss an den Parallelflächen drehfest auf dem Ankerstab hält. Dieses Dokument offenbart alle Merkmale des Oberbegriffs des Anspruchs 1.

Eine ähnliche Konstruktion offenbart die europäische Patentanmeldung EP 3 385 469 A1, in der ein ebenfalls exzentrischer Schieber quer in einer Öffnung einer Hülse verschiebbar angeordnet ist, die an Stelle der Ankermutter auf einem Ankerstab angeordnet ist. Der Ankerstab des Schalungsankers weist ein Außengewinde an einem Ende und umlaufende Rippen, die von zwei Parallelflächen an gegenüberliegenden Umfangsstellen des Ankerstabs unterbrochen sind, an einem anderen Ende auf. Die Hülse weist zu den umlaufenden Rippen des Ankerstabs komplementäre Nuten an gegenüberliegenden Umfangsstellen eines axialen Durchgangslochs auf, so dass sich die Hülse in eine Stellung drehen lässt, in der sie axial auf dem Ankerstab verschiebbar ist. Durch eine Drehung der Hülse auf dem Ankerstab um 90° gelangen die Nuten der Hülse in Eingriff auf den Rippen des Ankerstabs und halten die Hülse axialfest auf dem Ankerstab. In dieser Drehstellung der Hülse lässt sich der Schieber in der Hülse so quer zum Ankerstab verschieben, dass er an einer der beiden Parallelflächen anliegt und die Hülse durch Formschluss mit der einen Parallelfläche drehfest auf dem Ankerstab hält. Die Hülse ist dadurch gegen unbeabsichtigtes Verdrehen gesichert.

Aufgabe der Erfindung ist, einen Schalungsanker der vorstehend erläuterten Art mit einer Formschlusskupplung, die durch eine Axialbewegung außer Eingriff bringbar ist, zur Drehsicherung einer Ankermutter auf einem Ankerstab vorzuschlagen.

Diese Aufgabe wird durch die Merkmale des Anspruchs 1 gelöst. Der erfindungsgemäße Schalungsanker weist einen Ankerstab mit einem Außengewinde und eine Ankermutter, die auf das Außengewinde schraubbar oder geschraubt ist, auf. Das Außengewinde erstreckt sich vorzugsweise von einem Ende über eine Länge des Ankerstabs, die eine Abstandseinstellung der Schalungselemente in einem vorgegebenen Wanddickenbereich ermöglicht. Das Außengewinde kann an dem Ende des Ankerstabs beginnen oder es weist einen Abstand von beispielsweise ein bis drei Durchmessern des Ankerstabs von dem Ende des Ankerstabs auf.

An einem gegenüberliegenden Ende kann der Ankerstab ebenfalls ein Außengewinde zum Aufschrauben einer zweiten Ankermutter oder zum Einschrauben des Ankerstabs in eine Ankermutter oder allgemein ein Innengewinde eines Schalungselements aufweisen.

Des Weiteren weist der erfindungsgemäße Schalungsanker ein Drehsicherungselement, das drehfest und axial beweglich mit dem Ankerstab ist, und eine lösbare Formschlusskupplung, mit der das Drehsicherungselement lösbar drehfest mit der Ankermutter verbindbar ist und die durch eine Axialbewegung in und außer Eingriff bringbar ist, auf. "In Eingriff" bedeutet, dass die Formschlusskupplung die Ankermutter durch Formschluss drehfest mit dem Drehsicherungselement verbindet, wodurch die Ankermutter über die Formschlusskupplung und das Drehsicherungselement drehfest mit dem Ankerstab verbunden ist. Dadurch lässt sich die Ankermutter in ihrer Position auf dem Ankerstab gegen unbeabsichtigtes Verstellen sichern. "Außer Eingriff" bedeutet, dass die Formschlusskupplung die Ankermutter nicht mit dem Drehsicherungselement verbindet, so dass die Ankermutter durch Drehen auf dem Außengewinde des Ankerstabs axial auf dem Ankerstab verstellbar ist.

Außer für eine beidseitige Ankerung, bei der einander abgewandte Rückseiten zweier mit Abstand voneinander angeordneter Schalungselemente zugänglich sind und bei der der Ankerstab durch zumindest näherungsweise fluchtende Durchstecklöcher in den beiden Schalungselementen gesteckt und Ankermuttern an den einander abgewandten Rückseiten der beiden Schalungselemente auf den Ankerstab geschraubt werden, eignet sich der erfindungsgemäße Schalungsanker auch für eine Durchsteckmontage bei Zugänglichkeit einer Betonwandschalung von nur einer Seite. In diesem Fall wird die Wanddicke der zu betonierenden Wand durch Drehen der Ankermutter auf dem Ankerstab eingestellt und die Ankermutter durch in Eingriff bringen der Formschlusskupplung auf dem Ankerstab fixiert. Der Ankerstab wird von der Rückseite eines zugänglichen Schalungselements durch die miteinander zumindest näherungsweise fluchtenden Durchstecklöcher der beiden mit Abstand voneinander angeordneten Schalungselemente durchgesteckt und in eine Ankermutter oder allgemein ein Innengewinde an einem unzugänglichen Schalungselement geschraubt. Die Ankermutter des Schalungsankers wird an der Rückseite des zugänglichen Schalungselements festgelegt.

Die Ankermutter und das Drehsicherungselement sind als komplementäre Teile der Formschlusskupplung ausgebildet, das heißt die Ankermutter und das Drehsicherungselement bilden zugleich auch die Formschlusskupplung oder Teile der Formschlusskupplung, die weitere Teile aufweisen kann.

Das Drehsicherungselement weist eine auf dem Ankerstab axial verschiebliche Hülse auf. Ein Innenquerschnitt der Hülse korrespondiert mit dem nicht kreisrunden Querschnitt des Ankerstabs so, dass ein Formschluss der beiden Querschnitte die Hülse drehfest auf dem Ankerstab hält. Der Innenquerschnitt der Hülse kann gegengleich zum Querschnitt des Ankerstabs sein. Es besteht allerdings auch die Möglichkeit unterschiedlicher Querschnitte des Ankerstabs und der Hülse, die die Drehfestigkeit durch Formschluss bewirken.

Um das Drehsicherungselement durch Formschluss drehfest auf dem Ankerstab zu halten, sieht eine Ausgestaltung der Erfindung vor, dass der Ankerstab zumindest in einem axialen Abschnitt, in dem das Drehsicherungselement zum Einstellen des Abstands der beiden Schalungselemente verschiebbar ist, einen nicht kreisrunden Querschnitt aufweist, der die Drehfestigkeit des Drehsicherungselemente durch Formschluss an dem Querschnitt des Ankerstabs ermöglicht. Zu berücksichtigen ist bei Ausgestaltungen der Erfindung, dass sich in diesem axialen Abschnitt des Ankerstabs auch das Außengewinde für die Ankermutter befindet, der nicht kreisrunde Querschnitt sollte in diesen Fällen auch für das Außengewinde geeignet sein. Eine Möglichkeit eines solchen nicht kreisrunden Querschnitts sind die aus dem Stand der Technik bekannten Abflachungen, die zwei achsparallel zum Ankerstab verlaufende Parallelflächen an gegenüberliegenden Umfangsstellen des Ankerstabs bilden. Möglich ist ein solcher nicht kreisrunder Querschnitt auch mit nur einer oder mehreren achsparallel zum Ankerstab verlaufenden Tangentialflächen an einer oder mehreren Umfangsstellen des Ankerstabs. Möglich ist beispielsweise auch eine oder mehrere Längsnuten im Ankerstab zumindest im Bereich des Außengewindes, in die ein Keil, eine Nase oder dergleichen des Drehsicherungselements greift. Die Aufzählung ist beispielhaft und nicht abschließend.

Als Formschlusskupplung können die Ankermutter und das Drehsicherungselement des erfindungsgemäßen Schalungsankers beispielsweise Stirnverzahnungen an einander zugewandten Stirnseiten aufweisen oder nach Art einer Klauenkupplung ausgebildet sein. Eine Ausgestaltung der Erfindung sieht vor, dass die Ankermutter eine Aussparung oder einen Schlitz in der dem Drehsicherungselement zugewandten Stirnseite aufweist, die an der Stirnseite offen ist. Das Drehsicherungselement weist einen zu der Aussparung korrespondierenden Vorsprung an der der Ankermutter zugewandten Stirnseite und/oder an einem Umfang auf, der durch Verschieben des Drehsicherungselements zur Ankermutter in deren Aussparung gelangt und dadurch die Ankermutter durch Formschluss zwischen dem Vorsprung und der Aussparung drehfest mit dem Drehsicherungselement verbindet, das seinerseits durch Formschluss drehfest mit dem Ankerstab ist. Es können die Ankermutter und/oder das Drehsicherungselement auch mehrere solche Aussparungen und Vorsprünge gleichmäßig oder ungleichmäßig über den Umfang verteilt aufweisen. Es können auch umgekehrt der oder die Vorsprünge an der Ankermutter und die Aussparung/en am Drehsicherungselement vorgesehen sein. Auch eine Kombination von gleichmäßig oder ungleichmäßig über den Umfang verteilt angeordneten Aussparungen und Vorsprüngen an den einander zugewandten Stirnseiten sowohl der Ankermutter als auch des Drehsicherungselements sind möglich.

Eine Ausgestaltung der Erfindung sieht einen achsparallel oder eventuell auch schräg beziehungsweise wendelförmige verlaufenden Schlitz in der dem Drehsicherungselement oder der Ankermutter zugewandten Stirnseite der Ankermutter oder des Drehsicherungselements und einen zu dem Schlitz komplementären Flügel, Rippe, Zapfen oder dergleichen an der der Ankermutter oder dem Drehsicherungselement zugewandten Stirnseite und/oder am Umfang des Drehsicherungselements oder der Ankermutter vor, der in den Schlitz gelangt, wenn das Drehsicherungselement zur Ankermutter geschoben wird, so dass der Flügel, die Rippe, der Zapfen oder dergleichen durch Formschluss in dem Schlitz die Ankermutter drehfest mit dem Drehsicherungselement verbindet. Auch hier können mehrere Schlitze und/oder Flügel, Rippen, Zapfen oder dergleichen gleichmäßig oder ungleichmäßig über den Umfang verteilt angeordnet sein und/oder es weisen sowohl die Ankermutter als auch das Drehsicherungselement sowohl Schlitze als auch Flügel, Rippen, Zapfen oder dergleichen auf.

Eine bevorzugte Ausgestaltung der Erfindung sieht vor, dass die Formschlusskupplung in festgelegten Winkelschritten von insbesondere 60°, 90°, 120°, 180° oder 360° in Eingriff bringbar ist. Dadurch ist die Ankermutter in den Winkelschritten gegen Drehen auf dem Ankerstab festlegbar. Das ermöglicht eine axiale Festlegung der Ankermutter auf dem Ankerstab in entsprechenden Bruchteilen einer Steigung des Außengewindes des Ankerstabs. Ist die Ankermutter beispielsweise in Winkelschritten von 120° oder 180° drehfest auf dem Ankerstab festgelegt, lässt sie sich axial nach jeweils einem Drittel oder einem halben Gewindegang auf dem Ankerstab festlegen.

Eine Ausgestaltung der Erfindung sieht ein lösbares Sicherungselement vor, das die Formschlusskupplung lösbar in Eingriff hält und gegen unbeabsichtigtes Lösen sichert. Das Sicherungselement kann beispielsweise einen Federbügel aufweisen, der seitlich auf die Ankermutter und/oder auf das Drehsicherungselement aufschnappbar ist und der die Formschlusskupplung in Eingriff hält, wenn er aufgeschnappt und die Formschlusskupplung in Eingriff ist.

Sämtliche in der Beschreibung genannte und/oder der Zeichnung dargestellte Merkmale können einzeln für sich oder in jeder beliebigen Kombination bei Ausführungen der Erfindung verwirklicht sein. Ausführungen der Erfindung, die nicht alle, sondern nur einen Teil der Merkmale eines Anspruchs, auch des unabhängigen Anspruchs, aufweisen, sind möglich.

Die Erfindung wird nachfolgend anhand eines in der Zeichnung dargestellten Ausführungsbeispiels näher erläutert. Es zeigen:
- Figur 1: einen erfindungsgemäßen Schalungsanker in perspektivischer Darstellung; und
- Figur 2: eine perspektivische Explosionsdarstellung einer Ankermutter, eines Drehsicherungselements und weiterer Teile des Schalungsankers aus Figur 1 in größerer Darstellung.

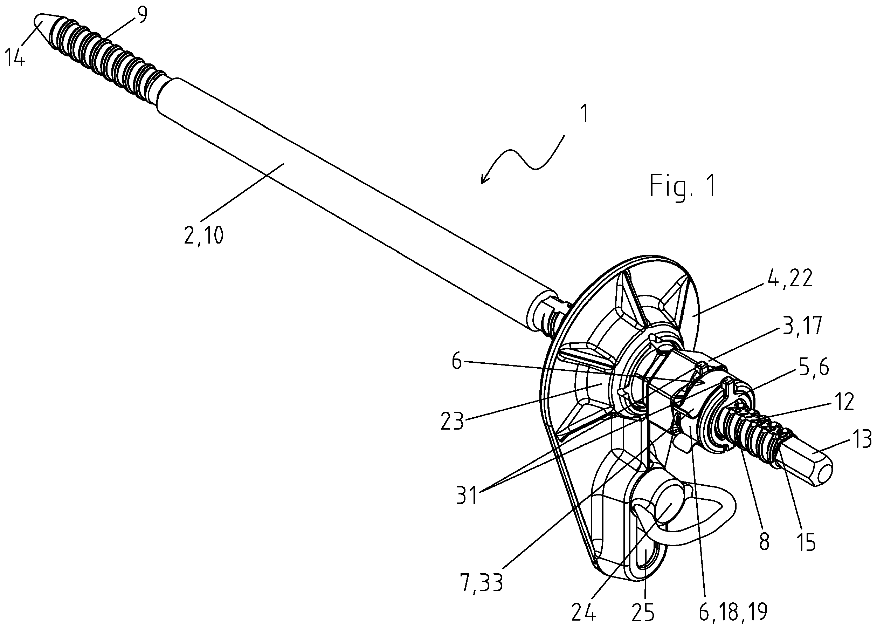

Der in Figur 1 dargestellte, erfindungsgemäße Schalungsanker 1 ist zum Verbinden von zwei nicht dargestellten, einander gegenüber in einem Abstand voneinander angeordneten Schalungselementen vorgesehen. Die Schalungselemente weisen eine Platte aus (Sperr-) Holz oder Kunststoff als Schalhaut und einen Rahmen aus längs und quer beziehungsweise horizontal und vertikal verlaufenden Profilen aus Stahl oder Aluminium auf einer Rückseite der Schalhaut zur Versteifung der Schalhaut auf. Die Rückseite ist die Seite der Schalhaut, an der der Rahmen angeordnet ist. Die beiden Schalungselemente werden mit ihren Schalhäuten einander zugewandt aufgestellt.

Der Schalungsanker 1 weist einen Ankerstab 2, eine Ankermutter 3, ein Widerlager 4, ein Drehsicherungselement 5, eine Formschlusskupplung 6 und ein Sicherungselement 7 auf.

Der Ankerstab 2 weist zwei Außengewinde 8, 9 auf, zwischen denen sich ein glattwandiger, konischer Stababschnitt 10 befindet. Die Außengewinde 8, 9 können unterschiedliche Durchmesser und/oder unterschiedliche Steigungen aufweisen, vorzugsweise sind die Außengewinde 8, 9 gleich, so dass sie sich in gleiche Innengewinde schrauben lassen. Auf das Außengewinde 8 an einem durchmessergrößeren Ende des konischen Stababschnitts 10 ist die Ankermutter 3 aufschraubbar beziehungsweise aufgeschraubt, die für diesen Zweck ein axiales Durchgangsloch 11 mit einem in der Zeichnung nicht sichtbaren Innengewinde aufweist. An das Außengewinde 8 des Ankerstabs 2 schließt sich ein Sechskant 13 an, mit dem der Ankerstab 2 endet. An einem gegenüberliegenden Ende endet der Ankerstab 2 mit einer kegelstumpfförmigen Spitze 14. An dem Sechskant 13 lässt sich ein nicht dargestellter Schraubenschlüssel wie beispielsweise ein Gabelschlüssel zum Drehen des Ankerstabs 2 ansetzen.

Im Bereich des Außengewindes 8, auf das die Ankermutter 3 schraubbar beziehungsweise geschraubt ist, weist der Ankerstab 2 zwei Abflachungen an gegenüberliegenden Umfangsstellen auf, die zwei einander gegenüberliegende Parallelflächen 15 an den gegenüberliegenden Umfangsstellen des Ankerstabs 2 bilden. Die beiden Parallelflächen 15 erstrecken sich achsparallel zum Ankerstab 2 so tief wie oder etwas tiefer als ein Grund zwischen Gewindegängen des Außengewindes 8 des Ankerstabs 2, so dass Windungen des Außengewindes 8 im Bereich der Parallelflächen 15 unterbrochen sind.

An einer der beiden Parallelflächen 15 des Ankerstabs 2 ist eine Skala 12 angebracht, die mit einer Referenzebene an einer festgelegten Stelle in einer Längsrichtung des Ankerstabs 2 und mit der Ankermutter 3 korrespondiert. Die Referenzebene befindet sich beispielsweise an einer Ringstufe an einem Übergang von dem glattwandigen, konischen Stababschnitt 10 zu dem Außengewinde 9 an der Spitze 14 des Ankerstabs 2. An der Skala 12 ist die durch Drehen der Ankermutter 3 auf dem Ankerstab 2 eingestellte Wanddicke der zu betonierenden Wand ablesbar. Durch eine Halbe Drehung der Ankermutter 3 lässt sich die Wanddicke in Schritten von einer Hälfte einer Steigung des Gewindes 8 einstellen.

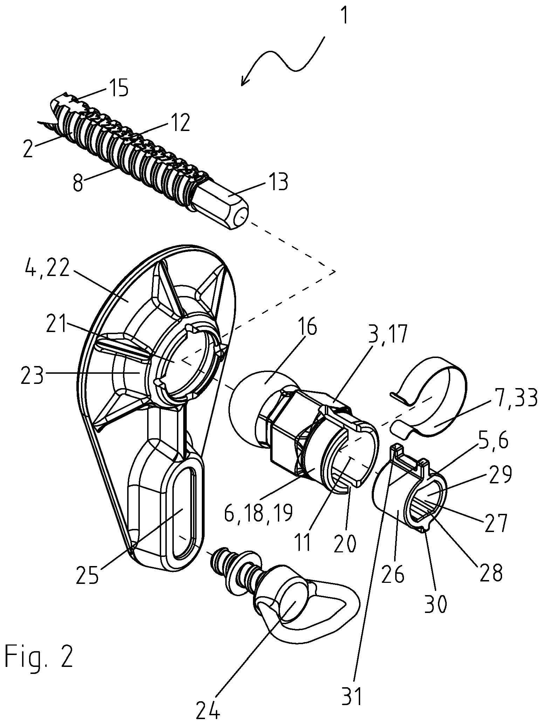

Die Ankermutter 3, die in Figur 2 einzeln zu sehen ist, weist einen Kugelkopf 16 auf, an den sich koaxial ein Sechskant 17 und an diesen ein zylindrischer Abschnitt 18 mit einer breiten und flachen umlaufenden Nut 19 anschließt. Das koaxiale Durchgangsloch 11 durchsetzt die Ankermutter 3 auf ihrer ganzen Länge, das heißt den Kugelkopf 16, den Sechskant 17 und den zylindrischen Abschnitt 18. Im Durchgangsloch 11 weist die Ankermutter 3 im Bereich des Kugelkopf 16 und des Sechskant 17 das Innengewinde auf, mit dem sie auf das Außengewinde 8 des Ankerstabs 2 schraubbar beziehungsweise geschraubt ist. Im Bereich des zylindrischen Abschnitts 18 ist das Durchgangsloch 11 gewindelos und weist einen Durchmesser auf, der größer als ein Außendurchmesser des Außengewindes 8 des Ankerstabs 2 ist. Im Bereich des zylindrischen Abschnitts 18 weist die Ankermutter 3 zwei Schlitze 20 an gegenüberliegenden Umfangsstellen in einer Axialebene der Ankermutter 3 auf. Die Schlitze 20 sind an der Stirnseite der Ankermutter 3 offen.

Das Widerlager 4, das ebenfalls in Figur 2 einzeln zu sehen ist, weist eine Widerlagerplatte 22, ein Durchgangsloch 21 für den Ankerstab 2 und eine zu dem Durchgangsloch 21 koaxiale Kugelpfanne 23 auf einer Rückseite der Widerlagerplatte 22 auf. Mit der Kugelpfanne 23 ist das Widerlager 4 in alle Richtungen schwenkbar auf dem Kugelkopf 16 der Ankermutter 3 gelagert. Mittels einer Befestigungsschraube 24, die in einem zu dem Durchgangsloch 21 radialen Langloch 25 außerhalb der Kugelpfanne 23 angeordnet ist, lässt sich das Widerlager 4 mit der Widerlagerplatte 22 an der Rückseite eines der beiden Schalungselemente befestigen.

Das Drehsicherungselement 5, das ebenfalls in Figur 2 einzeln zu sehen ist, weist eine Hülse 26 mit einem axialen Durchgangsloch 27 auf, dessen Querschnitt gegengleich zu einem Querschnitt des Ankerstabs 2 im Bereich des Außengewindes 8 ist, auf das die Ankermutter 3 aufschraubbar beziehungsweise aufgeschraubt ist.

Der Querschnitt des Durchgangslochs 27 der Hülse 26 des Drehsicherungselements 5 weist zwei Parallelflächen 28 in einem dem Abstand der Parallelflächen 15 des Ankerstabs 2 auf, die durch zwei Zylinderflächen 29 verbunden sind, deren Durchmesser einem Außendurchmesser des Außengewindes 8 des Ankerstabs 2 entspricht. Der Querschnitt des Durchgangslochs 27 der Hülse 26 kann auch etwas größer als der Querschnitt des Ankerstabs 2 im Bereich des Außengewindes 8 sein, so dass das Drehsicherungselement 5 Spiel auf dem Ankerstab 2 aufweist. Das Drehsicherungselement 5 ist axial im Bereich des Außengewindes 8 auf dem Ankerstab 2 verschiebbar. Die gegengleiche Form des Querschnitts des Durchgangslochs 27 der Hülse 26 des Drehsicherungselemente 5 hält das Drehsicherungselement 5 durch Formschluss mit dem Querschnitt des Ankerstabs 2 im Bereich des Außengewindes 8 drehfest auf dem Ankerstab 2.

Von der Hülse 26 des Drehsicherungselements 5 steht an einer Umfangsstelle eine Längsrippe 30 in einer Axialebene nach außen ab. An einer gegenüberliegenden Umfangsstelle stehen zwei Zapfen 31 in derselben Axialebene wie die Längsrippe 30 nach außen von der Hülse 26 ab. Ein axialer Abstand der beiden Zapfen 31 entspricht einer Breite der flachen, umlaufenden Nut 19 im zylindrischen Abschnitt 18 der Ankermutter 3.

Die Ankermutter 3 mit den Schlitzen 20 und die Hülse 26 des Drehsicherungselements 5 mit der Längsrippe 30 und den Zapfen 31 bilden die Formschlusskupplung 6, die durch eine axiale Bewegung des Drehsicherungselements 5 in Bezug auf die Ankermutter 3 in Eingriff und außer Eingriff bringbar ist: In Eingriff wird die Formschlusskupplung 6 dadurch gebracht, dass das Drehsicherungselement 5 axial auf dem Ankerstab 2 in Richtung zur Ankermutter 3 verschoben und in deren Durchgangsloch 11 innerhalb ihres zylindrischen Abschnitts 18 geschoben wird. Dabei gelangen die Längsrippe 30 und die Zapfen 31 in die Schlitze 20 im zylindrischen Abschnitt 18 der Ankermutter 3, wodurch die Ankermutter 3 durch Formschluss der Längsrippe 30 und der Zapfen 31 in den Schlitzen 20 drehfest mit dem Drehsicherungselement 5 verbunden ist. Weil das Drehsicherungselement 5 drehfest auf dem Ankerstab 2 ist, ist die Ankermutter 3 ebenfalls drehfest mit dem Ankerstab 2, wenn die Formschlusskupplung 6 wie beschrieben in Eingriff gebracht ist. Durch ihren Gewindeeingriff am Außengewinde 8 des Ankerstabs 2 ist die Ankermutter 3 axial auf dem Ankerstab 2 fixiert, wenn sie drehfest mit dem Ankerstab 2 gehalten ist, das heißt wenn die Formschlusskupplung 6 in Eingriff ist.

Außer Eingriff wird die Formschlusskupplung 6 dadurch gebracht, dass die Hülse 26 des Drehsicherungselements 5 axial aus der Ankermutter 3 herausgezogen wird, wodurch die Längsrippe 30 und die Zapfen 31 der Hülse 26 des Drehsicherungselements 5 aus den Schlitzen 20 der Ankermutter 3 austreten und die Ankermutter 3 auf dem Außengewinde 8 des Ankerstabs 2 drehbar ist. Durch Drehen der Ankermutter 3 lässt sich die Ankermutter 3 in axialer Richtung auf dem Ankerstab 2 einstellen. Die Formschlusskupplung 6 lässt sich nach jeweils einer halben Umdrehung der Ankermutter 3 in Eingriff bringen, so dass sich die Ankermutter 3 in axialer Richtung des Ankerstabs 2 in Schritten von einer Hälfte einer Steigung des Außengewindes 8 auf dem Ankerstab 2 festlegen lässt.

Die Schlitze 20 im zylindrischen Abschnitt 18 der Ankermutter 3 können allgemein auch als Aussparungen und die Längsrippe 30 und die Zapfen 31 der Hülse 26 des Drehsicherungselements 25 als Vorsprünge aufgefasst werden.

Das Sicherungselement 7 weist einen streifenförmigen Federbügel 33 auf, der sich zylinderförmig über mehr als 180° und weniger als 360° und im Ausführungsbeispiel über etwa 270° in einer Umfangsrichtung erstreckt und dessen Enden schräg auseinanderstehend nach außen weisen. Wenn die Formschlusskupplung 6 in Eingriff ist, das heißt sich die Hülse 26 des Drehsicherungselements 5 im zylindrischen Abschnitt 18 der Ankermutter 3 befindet, lässt sich der Federbügel 33 radial auf beziehungsweise in die flache umlaufende Nut 19 im zylindrischen Abschnitt 18 der Ankermutter 3 aufschnappen. Dabei greift der Federbügel 33 zwischen den beiden Zapfen 31 durch, die von der Hülse 26 des Drehsicherungselemente 5 nach außen stehen, wodurch die Hülse 26 des Drehsicherungselements 5 axial gegen Heraustreten aus dem zylindrischen Abschnitt 18 der Ankermutter 3 gesichert ist und die Formschlusskupplung 6 in Eingriff gehalten wird. Durch eine Drehung des Federbügels 33 so, dass seine Öffnung mit den Zapfen 31 fluchtet, wird das Drehsicherungselement 5 frei gegeben und kann aus der Ankermutter 3 heraus gezogen werden. Alternativ kann zur Freigabe des Drehsicherungselements 5 der Federbügel 33 radial aus der umlaufenden Nut 19 der Ankermutter 3 heraus gezogen werden.

Um die beiden nicht dargestellten, in einem Abstand voneinander angeordneten Schalungselemente miteinander zu verbinden, wird zunächst eine Dicke der zu betonierenden Wand durch Drehen der Ankermutter 3 auf dem Ankerstab 2 eingestellt und mittels des Drehsicherungselements 5 auf dem Ankerstab 2 fixiert. Die eingestellte Wanddicke ist an der Skala 12 ablesbar. Zum Fixieren der Ankermutter 3 auf dem Ankerstab 2 wird die Hülse 26 des Drehsicherungselements 5 in den zylindrischen Abschnitt 18 der Ankermutter 3 geschoben, wodurch wie oben beschrieben die Längsrippe 30 und die Zapfen 31 der Hülse 26 des Drehsicherungselements 5 in die Schlitze 20 im zylindrischen Abschnitt 18 der Ankermutter 3 eintreten und die Ankermutter 3 drehfest am Drehsicherungselement 5 halten. Die Formschlusskupplung 6 ist in Eingriff. Um die Hülse 26 in den zylindrischen Abschnitt 18 der Ankermutter 3 schieben zu können, muss die Ankermutter 3 so auf dem Ankerstab 2 gedreht werden, dass ihre Schlitze 20 mit der Längsrippe 30 und den Zapfen 31 der Hülse 26 des Drehsicherungselemente 5 fluchten. Zum Sichern gegen unbeabsichtigtes Lösen wird der Federbügel 33 des Sicherungselements 7, der normaler Weise nicht von der Ankermutter 3 gelöst wird sondern sich in der umlaufenden Nut 18 der Ankermutter 3 befindet, so in der Nut 18 gedreht, dass er zwischen die beiden Zapfen 31 des Drehsicherungselements 5 greift, wodurch das Drehsicherungselement 5 im zylindrischen Abschnitt 18 der Ankermutter 3 gehalten ist. Der Federbügel 33 ist durch Reibung gegen unbeabsichtigtes Drehen in der umlaufenden Nut 18 gehalten.

Anschließend wird der Ankerstab 2 mit seiner Spitze 14 voraus von der Rückseite eines der beiden Schalungselemente durch miteinander zumindest näherungsweise fluchtend Durchstecklöcher der Schalungselemente durchgesteckt und in eine nicht dargestellte Ankermutter geschraubt, die auf einer Rückseite eines anderen der beiden Schalungselemente befestigt ist. Sofern die Rückseite des anderen Schalungselements zugänglich ist, kann die Ankermutter auch auf das Außengewinde 9 des durch die beiden Schalungselemente gesteckten Ankerstabs 2 geschraubt werden. Das Widerlager 4 wird mit der Befestigungsschraube 24 an der Rückseite des Schalungselements befestigt, wobei es sich durch den Kugelkopf 16 der Ankermutter 3 an der Rückseite des Schalungselements ausrichtet.

## Patentansprüche

1. Schalungsanker zum Verbinden von zwei einander gegenüber in einem Abstand voneinander angeordneter Schalungselementen, mit einem ein Außengewinde (8) aufweisenden Ankerstab (2), mit einer auf das Außengewinde (8) geschraubten Ankermutter (3), mit einem Drehsicherungselement (5), das drehfest und axialbeweglich mit dem Ankerstab (2) ist, und mit einer lösbaren Formschlusskupplung (6), mit der das Drehsicherungselement (5) lösbar drehfest mit der Ankermutter (3) verbindbar ist und die durch eine Axialbewegung in und außer Eingriff bringbar ist, wobei die Ankermutter (3) und das Drehsicherungselement (5) komplementäre Teile der Formschlusskupplung (6) aufweisen, **dadurch gekennzeichnet, dass** das Drehsicherungselement (5) eine auf dem Ankerstab (2) axial verschiebliche Hülse (26) aufweist, die einen zu dem Querschnitt des Ankerstabs (2) korrespondierenden Innenquerschnitt aufweist, der das Drehsicherungselement (5) durch Formschluss drehfest auf dem Ankerstab (2) hält.

2. Schalungsanker nach Anspruch 1, **dadurch gekennzeichnet, dass** der Ankerstab (2) einen nicht kreisrunden Querschnitt und insbesondere eine achsparallele ebene Fläche (15) aufweist, der/die das Drehsicherungselement (5) durch Formschluss drehfest am Ankerstab (2) hält.

3. Schalungsanker nach Anspruch 1 oder 2, **dadurch gekennzeichnet, dass** die Ankermutter (3) und das Drehsicherungselement (5) mindestens einen Schlitz (20) und mindestens einen mit dem Schlitz (20) korrespondierende Rippe (30, 31) an einander zugewandten Stirnseiten aufweisen, die durch eine Axialverschiebung des Drehsicherungselements (5) zur Ankermutter (3) in Eingriff bringbar sind und die die Ankermutter (3) und das Drehsicherungselement (5) durch Formschluss drehfest miteinander verbinden, wenn sie in Eingriff miteinander sind.

4. Schalungsanker nach einem oder mehreren der vorhergehenden Ansprüche, **dadurch gekennzeichnet, dass** die Ankermutter (3) und/oder das Drehsicherungselement (5) mindestens einen in Längsrichtung verlaufenden Schlitz (20), der an der dem Drehsicherungselement (5) und/oder der Ankermutter (3) zugewandten Stirnseite offen ist, und/oder das Drehsicherungselement (5) und/oder die Ankermutter (3) mindestens einen zu dem Schlitz (20) komplementären Rippe (30) aufweist, der durch eine Axialverschiebung des Drehsicherungselements (5) zur Ankermutter (3) in den Schlitz (20) gelangt und die Ankermutter (3) und das Drehsicherungselement (5) durch Formschluss im Schlitz (20) drehfest miteinander verbindet.

5. Schalungsanker nach einem oder mehreren der vorhergehenden Ansprüche, **dadurch gekennzeichnet, dass** die Formschlusskupplung (6) in Winkelschritten, insbesondere in Winkelschritten von 60°, 90°, 120°, 180° oder 360° in Eingriff bringbar ist.

6. Schalungsanker nach einem oder mehreren der vorhergehenden Ansprüche, **dadurch gekennzeichnet, dass** der Schalungsanker (1) ein lösbares und/oder drehbares Sicherungselement (7) aufweist, durch das die Formschlusskupplung (6) lösbar in Eingriff gehalten werden kann.

7. Schalungsanker nach Anspruch 6, **dadurch gekennzeichnet, dass** das Sicherungselement (7) einen Federbügel (33) aufweist, der radial auf die Ankermutter (3) und/oder das Drehsicherungselement (5) aufschnappbar ist, wenn sich die Formschlusskupplung in Eingriff befindet, und das die Ankermutter (3) und das Drehsicherungselement (5) durch Formschluss axialfest miteinander verbindet, wenn es auf die Ankermutter (3) und das Drehsicherungselement (5) aufgeschnappt ist.

8. Schalungsanker nach Anspruch 6 oder 7, **dadurch gekennzeichnet, dass** das Sicherungselement (7) in eine Position auf der Ankermutter (3) drehbar ist, in der kein Formschluss in axialer Richtung zwischen der Ankermutter (3) und dem Drehsicherungselement (5) besteht, so dass das Drehsicherungselement (5) in axialer Richtung von der Ankermutter (3) lösbar ist.

9. Schalungsanker nach einem oder mehreren der vorhergehenden Ansprüche, **dadurch gekennzeichnet, dass** der Ankerstab (2) eine Skala (12) für eine mit der Ankermutter (3) eingestellte Wanddicke einer zu betonierenden Wand aufweist.

10. Schalungsanker nach Anspruch 9, **dadurch gekennzeichnet, dass** die Skala (12) mit einer Referenzebene an einer festgelegten Stelle in einer Längsrichtung des Ankerstabs (2) und mit der Ankermutter (3) korrespondiert.

## Claims

1. A formwork tie for connecting two formwork elements that are disposed opposite and at a distance from one another, comprising a tie rod (2) including an external thread (8), comprising a tie nut (3) that is screwed onto the external thread (8), comprising an anti-rotation element (5), which is non-rotatable and axially movable with respect to the tie rod (2), and comprising a releasable form fit coupling (6), by way of which the anti-rotation element (5) can be releasably non-rotatably connected to the tie nut (3) and which can be made to engage and disengage by an axial movement, the tie nut (3) and the anti-rotation element (5) comprising complementary parts of the form fit coupling (6), **characterized in that** the anti-rotation element (5) comprises a sleeve (26) that is axially displaceable on the tie rod (2) and that has an inner cross-section, corresponding to the cross-section of the tie rod (2), which holds the anti-rotation element (5) non-rotatably on the tie rod (2) by way of form fit.

2. The formwork tie according to claim 1, **characterized in that** the tie rod (2) has a non-circular cross-section and, in particular, an axially parallel planar surface (15), which holds the anti-rotation element (5) non-rotatably at the tie rod (2) by way of form fit.

3. The formwork tie according to claim 1 or 2, **characterized in that** the tie nut (3) and the anti-rotation element (5) include at least one slot (20) and at least one rib (30, 31), corresponding to the slot (20), at mutually facing end faces, which can be made to engage by an axial displacement of the anti-rotation element (5) with respect to the tie nut (3), and non-rotatably connect the tie nut (3) and the anti-rotation element (5) to one another by way of form fit when these are engaged with one another.

4. A formwork tie according to any one or more of the preceding claims, **characterized in that** the tie nut (3) and/or the anti-rotation element (5) include at least one slot (20) extending in the longitudinal direction, which is open at the end face facing the anti-rotation element (5) and/or the tie nut (3), and/or the anti-rotation element (5) and/or the tie nut (3) include at least one rib (30), complementary to the slot (20), which enters the slot (20) by axial displacement of the anti-rotation element (5) with respect to the tie nut (3), and non-rotatably connects the tie nut (3) and the anti-rotation element (5) to one another by way of form fit in the slot (20).

5. A formwork tie according to any one or more of the preceding claims, **characterized in that** the form fit coupling (6) can be made to engage at angular steps, in particular at angular steps of 60°, 90°, 120°, 180° or 360°.

6. A formwork tie according to any one or more of the preceding claims, **characterized in that** the formwork tie (1) comprises a releasable and/or rotatable securing element (7), by way of which the form fit coupling (6) can be held releasably in engagement.

7. The formwork tie according to claim 6, **characterized in that** the securing element (7) comprises a spring clip (33), which can be snapped radially onto the tie nut (3) and/or the anti-rotation element (5) when the form fit coupling is engaged, and which connects the tie nut (3) and the anti-rotation element (5) to one another in an axially fixed manner by way of form fit when snapped onto the tie nut (3) and the anti-rotation element (5).

8. The formwork tie according to claim 6 or 7, **characterized in that** the securing element (7) can be rotated into a position on the tie nut (3) in which no form fit exists in the axial direction between the tie nut (3) and the anti-rotation element (5), so that the anti-rotation element (5) can be released from the tie nut (3) in the axial direction.

9. A formwork tie according to any one or more of the preceding claims, **characterized in that** the tie rod (2) includes a scale (12) for a wall thickness of a wall to be poured which is set with the tie nut (3).

10. The formwork tie according to claim 9, **characterized in that** the scale (12) corresponds to a reference plane at an established location in a longitudinal direction of the tie rod (2) and to the tie nut (3).

## Revendications

1. Tirant de coffrage pour relier deux éléments de coffrage agencés l'un en face de l'autre à une distance l'un de l'autre, avec une tige de tirant (2) présentant un filetage extérieur (8), avec un écrou de tirant (3) vissé sur le filetage extérieur (8), avec un élément de blocage en rotation (5), qui est solidaire en rotation de la tige de tirant (2) et mobile axialement avec celle-ci, et avec un accouplement à complémentarité de forme (6) amovible, avec lequel l'élément de blocage en rotation (5) peut être relié de manière amovible, solidaire en rotation avec l'écrou de tirant (3) et qui peut être mis en prise et hors prise par un mouvement axial, l'écrou de tirant (3) et l'élément de blocage en rotation (5) présentant des parties complémentaires de l'accouplement à complémentarité de forme (6), **caractérisé en ce que** l'élément de blocage en rotation (5) présente une douille (26) pouvant être déplacée axialement sur la tige de tirant (2), qui présente une section transversale intérieure correspondant à la section transversale de la tige de tirant (2), qui maintient l'élément de blocage en rotation (5) de manière solidaire en rotation sur la tige de tirant (2) par complémentarité de forme.

2. Tirant de coffrage selon la revendication 1, **caractérisé en ce que** la tige de tirant (2) présente une section transversale non circulaire et notamment une surface plane axialement parallèle (15), qui maintient l'élément de blocage en rotation (5) de manière solidaire en rotation sur la tige de tirant (2) par complémentarité de forme.

3. Tirant de coffrage selon la revendication 1 ou 2, **caractérisé en ce que** l'écrou de tirant (3) et l'élément de blocage en rotation (5) présentent au moins une fente (20) et au moins une nervure (30, 31) correspondant à la fente (20) sur des côtés frontaux tournés l'un vers l'autre, qui peuvent être mis en prise par un déplacement axial de l'élément de blocage en rotation (5) par rapport à l'écrou de tirant (3) et qui relient l'écrou de tirant (3) et l'élément de blocage en rotation (5) l'un à l'autre de manière solidaire en rotation par complémentarité de forme lorsqu'ils sont en prise l'un avec l'autre.

4. Tirant de coffrage selon une ou plusieurs des revendications précédentes, **caractérisé en ce que** l'écrou de tirant (3) et/ou l'élément de blocage en rotation (5) présentent au moins une fente (20) s'étendant dans la direction longitudinale, qui est ouverte sur le côté frontal tourné vers l'élément de blocage en rotation (5) et/ou l'écrou de tirant (3), et/ou l'élément de blocage en rotation (5) et/ou l'écrou de tirant (3) présentent au moins une nervure (30) complémentaire à la fente (20), qui parvient dans la fente (20) par un déplacement axial de l'élément de blocage en rotation (5) par rapport à l'écrou de tirant (3) et relie l'écrou de tirant (3) et l'élément de blocage en rotation (5) l'un à l'autre de manière solidaire en rotation par complémentarité de forme dans la fente (20).

5. Tirant de coffrage selon une ou plusieurs des revendications précédentes, **caractérisé en ce que** l'accouplement à complémentarité de forme (6) peut être mis en prise par pas angulaires, notamment par pas angulaires de 60°, 90°, 120°, 180° ou 360°.

6. Tirant de coffrage selon l'une ou plusieurs des revendications précédentes, **caractérisé en ce que** le tirant de coffrage (1) présente un élément de blocage (7) amovible et/ou rotatif, grâce auquel l'accouplement à complémentarité de forme (6) peut être maintenu en prise de manière amovible.

7. Tirant de coffrage selon la revendication 6, **caractérisé en ce que** l'élément de blocage (7) présente un étrier à ressort (33) qui peut être encliqueté radialement sur l'écrou de tirant (3) et/ou l'élément de blocage en rotation (5) lorsque l'accouplement à complémentarité de forme est en prise, et qui relie de manière axialement fixe l'écrou de tirant (3) et l'élément de blocage en rotation (5) l'un à l'autre par complémentarité de forme lorsqu'il est encliqueté sur l'écrou de tirant (3) et l'élément de blocage en rotation (5).

8. Tirant de coffrage selon la revendication 6 ou 7, **caractérisé en ce que** l'élément de blocage (7) est rotatif sur l'écrou de tirant (3) dans une position dans laquelle il n'y a pas de complémentarité de forme dans la direction axiale entre l'écrou de tirant (3) et l'élément de blocage en rotation (5), de telle sorte que l'élément de blocage en rotation (5) peut être retiré de l'écrou de tirant (3) dans la direction axiale.

9. Tirant de coffrage selon une ou plusieurs des revendications précédentes, **caractérisé en ce que** la tige de tirant (2) présente une échelle (12) pour une épaisseur de paroi d'une paroi à bétonner réglée avec l'écrou de tirant (3).

10. Tirant de coffrage selon la revendication 9, **caractérisé en ce que** l'échelle (12) correspond à un plan de référence à un emplacement fixe dans une direction longitudinale de la tige d'ancrage (2) et à l'écrou d'ancrage (3).
